# EUROPÄISCHE PATENTSCHRIFT

(11) **EP 1 228 925 B1**
(45) Veröffentlichungstag und Bekanntmachung des Hinweises auf die Patenterteilung: **01.04.2009**
(21) Anmeldenummer: 02001313.2
(22) Anmeldetag: 18.01.2002
(51) Int. Cl.: B60Q 1/04

(54) **Befestigungsvorrichtung für Heckleuchten von Fahrzeugen, vorzugsweise von Kraftfahrzeugen**
Fixation device for vehicle rear lights
Dispositif de fixation des feux arrières de véhicules

(30) Priorität: 03.02.2001 DE 10104906
(43) Veröffentlichungstag der Anmeldung: 07.08.2002
(73) Patentinhaber: odelo GmbH, 71409 Schwaikheim (DE); Volkswagen Aktiengesellschaft, 38436 Wolfsburg (DE)
(72) Erfinder: Esser, Gerhard, 73779 Deizisau (DE); Holzmacher, Günther, 71679 Asperg (DE); Müller, Otto, 73344 Gruibingen (DE); Kienzle, Rainer, 71254 Ditzingen (DE); Müller, Michael, 38518 Gifhorn (DE)
(74) Vertreter: Jackisch-Kohl, Anna-Katharina

(56) Entgegenhaltungen:
- EP-A- 0 302 026
- EP-A- 0 481 411
- DE-A1- 10 102 189
- FR-A- 2 746 729
- GB-A- 2 344 136

## Beschreibung

Die Erfindung betrifft eine Einrichtung mit einer Heckleuchte eines Fahrzeuges, vorzugsweise eines Kraftfahrzeuges, und einer Befestigungseinrichtung nach dem Oberbegriff des Anspruches 1 bzw. 2.

Heckleuchten von Kraftfahrzeugen müssen in der Einbaulage genau positioniert sein. Um die genaue Einbaulage zu erreichen, wird die Heckleuchte beim Einbau mit einer Lehre in die erforderliche Einbauposition gebracht. Dann wird die Heckleuchte mit Schrauben als Befestigungselemente an der Wandung des Einbauraumes verschraubt. Aufgrund von Toleranzen des Karosseriebereiches kommt es jedoch vor, dass mit den Schrauben die Heckleuchte in der notwendigen Einbaulage nicht befestigt werden kann. Zum Ausgleich dieser Toleranzen sind dann aufwändige Maßnahmen erforderlich, um die Heckleuchte fest im Einbauraum verschrauben zu können.

Es sind Einrichtungen bekannt (FR 2 746 729), bei denen ein hülsenförmiges Gegenelement in einen Einbauraum eines Gehäuses einer Leuchte eingesetzt wird. Das Gegenelement wird von einer Schraube durchsetzt, die das Gegenelement im Aufnahmeraum aufweitet und verspannt. Außerdem wird das Gegenelement durch die Schraube gegen das Karosserieblech gezogen.

Bei einer anderen bekannten Einrichtung (EP 0 303 026 A) durchsetzt eine Schraube ein hülsenförmiges Gegenelement, das durch die Schraube in einem Aufnahmeraum verspannt wird. Das freie Ende der Schraube stützt sich an einer Druckfeder ab, die sich ihrerseits am Boden des Aufnahmeraumes abstützt.

Es ist eine Einrichtung bekannt (GB 2 344 136 A), bei der ein hülsenförmiges Gegenelement einstückig mit einem Federelement ausgebildet ist. Es stützt sich in der Einbaulage an der Stirnseite einer einen Aufnahmeraum begrenzenden Wandung ab. In die Wandung ist eine Schraube geschraubt, mit der das Gegenelement im Aufnahmeraum aufgeweitet wird. Beim Einschrauben wird das Gegenelement zunächst durch die Schraube mitgenommen, bis es in Aussparungen des Aufnahmeraumes gelangt und dort verkeilt wird.

Schließlich ist eine Einrichtung bekannt (EP 0 481 411 A), bei der zur Befestigung einer Armlehne in einem Fahrzeug eine Schraube eine Buchse durchsetzt, die sich in einer mit Längsschlitzen versehenen Buchse befindet. Sie wird in eine Gewindebohrung eines Griffes der Armlehne geschraubt.

Der Erfindung liegt die Aufgabe zugrunde, die gattungsgemäße Einrichtung so auszubilden, dass die Heckleuchte auch bei Toleranzen des Einbauraumes und/oder des Heckleuchtengehäuses einfach in der erforderlichen Einbaulage montiert werden kann.

Diese Aufgabe wird bei der gattungsgemäßen Einrichtung erfindungsgemäß mit den kennzeichnenden Merkmalen des Anspruches 1 bzw. 2 gelöst.

Bei der erfindungsgemäßen Einrichtung nach Anspruch 1 lässt sich das Gegenelement relativ zum Gehäuse der Heckleuchte verstellen. Bei größeren Einbautoleranzen ist somit eine einfache und sichere Befestigung der Heckleuchte im Einbauraum gewährleistet. Das Gegenelement wird so weit verschoben, dass mit dem Befestigungselement, vorzugsweise der Schraube, die Heckleuchte in der Einbaulage sicher befestigt werden kann. In der Aufnahme ist der Halter untergebracht, der durch eine Feder belastet ist und in den das Gegenelement ragt.

Bei der erfindungsgemäßen Einrichtung nach Anspruch 2 ist in der Aufnahme die Druckfeder untergebracht, die sich mit einem Ende am Quersteg und mit ihrem anderen Ende am Gegenelement abstützt. Der Quersteg ist in der Aufnahme vorgesehen und erstreckt sich diametral. Durch die Druckfeder wird das Gegenelement in Richtung auf die Wand des Einbauraumes belastet.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Schnitt eine erste Ausführungsform einer Befestigungseinrichtung einer erfindungsgemäßen Einrichtung,
- Fig. 2: im Schnitt eine zweite Ausführungsform einer Befestigungseinrichtung einer erfindungsgemäßen Einrichtung,
- Fig. 3 und Fig. 4: jeweils im Schnitt eine weitere Ausführungsform einer nicht zur Erfindung gehörenden Befestigungseinrichtung in zwei verschiedenen Stellungen,
- Fig. 5: in perspektivischer Darstellung eine weitere Ausführungsform einer Befestigungseinrichtung einer erfindungsgemäßen Einrichtung,
- Fig. 6: in perspektivischer Darstellung einen Teil der Befestigungseinrichtung gemäß Fig. 5,
- Fig. 7: einen Schnitt längs der Linie VII-VII in Fig. 8,
- Fig. 8: eine Seitenansicht der Befestigungseinrichtung gemäß Fig. 5.
- Fig. 9: die Befestigungseinrichtung gemäß Fig. 5 im Axialschnitt, jedoch in bezug auf Fig. 7 um 90° verdreht,
- Fig. 10: in einer Darstellung entsprechend Fig. 9 die Befestigungseinrichtung in montiertem Zustand,
- Fig. 11: in einer Darstellung entsprechend Fig. 10 die Befestigungseinrichtung in einer anderen Montagelage,
- Fig. 12: einen Schnitt längs der Linie XII-XII in Fig. 8.

Die Befestigungseinrichtungen dienen dazu, eine Heckleuchte 1 an einer Karosserie 2 eines Kraftfahrzeuges zu befestigen. Die Heckleuchte 1 hat ein Gehäuse 3, in dem in bekannter Weise die entsprechenden (nicht dargestellten) Leuchtkörper untergebracht sind, deren Licht durch eine Lichtscheibe 4 in Fahrtrichtung des Fahrzeuges nach hinten abgestrahlt wird. Die Heckleuchte 1 wird in einen Einbauraum 5 des Fahrzeuges eingebaut.

Vom Gehäuse 3 steht mindestens ein hülsenförmiger Ansatz 6 ab, der in Richtung auf eine Rückwand 7 des Einbauraumes 5 der Karosserie 2 ragt. Vorteilhaft ist der Ansatz 6 einstückig mit dem Gehäuse 3 ausgebildet. In den Ansatz 6 ist ein hülsenförmiger Halter 8 eingesetzt, dessen Wandung 9 an der Innenwand 11 des Ansatzes 6 anliegt. An einem Boden 12 des Halters 8 stützt sich eine Druckfeder 13 ab, die eine Befestigungsschraube 14 belastet. In den Halter 8 ragt eine Gewindehülse 15, in die die Schraube 14 geschraubt wird. Die Gewindehülse 15 ist an einem Ende mit einem radialen Bund 16 versehen, der in der Einbaulage der Heckleuchte 1 an der Innenseite 17 der Karosserie 2 anliegt. Die Schraube 14 ragt durch eine Öffnung 18 in der Karosserie 2 und liegt in der Einbaulage mit ihrem Kopf 19 an der Innenseite 20 der Karosserie 2 an.

Der Halter 8 kann auch als U-förmige Halteklammer ausgebildet sein, deren zueinander parallele Schenkel an der Innenwand 11 des Ansatzes 6 anliegen und die durch einen geraden Quersteg miteinander verbunden sind.

Der Ansatz 6 ist in Höhe des Halters 8 mit einem in der Wanddicke verringerten Endabschnitt 21 versehen, der von einem Ring 22 umgeben ist. Er liegt wenigstens über einen Teil seines Umfanges an einer radialen Schulter 23 an, die am Übergang vom Endabschnitt 21 in einen in der Wandstärke verdickten Abschnitt 24 des Ansatzes 6 vorgesehen ist. Der Ring 22 verhindert ein radiales Aufweiten des Endabschnittes 21 des Ansatzes 6 beim Einschrauben der Schraube 14. Dabei wird die Gewindehülse 15 radial elastisch aufgeweitet, deren Mantel am freien Ende mit axial verlaufenden Längsschlitzen 10 versehen ist, zwischen denen elastisch radial nach außen biegbare Abschnitte 10' liegen. Sie werden durch die Schraube 14 radial nach außen gebogen, wodurch der Halter 8 fest gegen die Innenwand des Ansatzes 6 gepreßt wird.

Mit der beschriebenen Befestigungsvorrichtung ist es möglich, die Heckleuchte 1 einfach und dennoch genau in der Einbaulage im Einbauraum 5 zu montieren. Vor dem Einsetzen der Heckleuchte 1 in den Einbauraum 5 ist die Gewindehülse 15 in den im Ansatz 6 befindlichen Halter 8 eingesetzt. Die genaue Einbaulage der Heckleuchte 1 wird durch (nicht dargestellte) Lehren bestimmt. Die Heckleuchte 1 wird so weit in den Einbauraum 5 eingesetzt, bis die Lichtscheibe 4 ihre genaue Einbaulage einnimmt. Beim Einsetzen kommt der Bund 16 der Gewindehülse 15 an der Karosserie 2 zur Anlage und wird dann gegen die Kraft der Druckfeder 13 axial relativ zum Halter 8 verschoben. Anschließend wird die Schraube 14 durch die Öffnung 18 in der Karosserie 2 gesteckt und in die Gewindehülse 15 geschraubt Sie sitzt unverdrehbar im Halter 8. Beim Drehen der Schraube 14 wird die Gewindehülse 15 in der beschriebenen Weise elastisch aufgeweitet, so daß der Halter 8 gegen die Innenseite des Ansatzes 6 gepreßt und damit die Heckleuchte 1 in ihrer richtigen Einbaulage gehalten wird. Auf diese Weise läßt sich die Heckleuchte 1 einfach und schnell in der Einbaulage montieren. Die Gewindehülse 15 ermöglicht einen einfachen Ausgleich von Karosserietoleranzen im Einbaubereich der Heckleuchte 1. Der Halter 8 ist am freien Ende mit wenigstens einem Verdrehschutz 8' versehen. Er wird durch wenigstens einen, vorzugsweise mehrere radial nach innen reichende Abschnitte gebildet, die in axial verlaufende Vertiefungen in der Außenseite der Gewindehülse 14 eingreifen. Die Abschnitte und die Vertiefungen sind etwa gleich breit.

Je nach Größe und/oder Form der Heckleuchte 1 können mehrere Ansätze 6 vorgesehen sein, so daß die Heckleuchte 1 an mehreren Stellen in der beschriebenen Weise im Einbauraum 5 des Fahrzeuges einfach und lagegenau montiert werden kann.

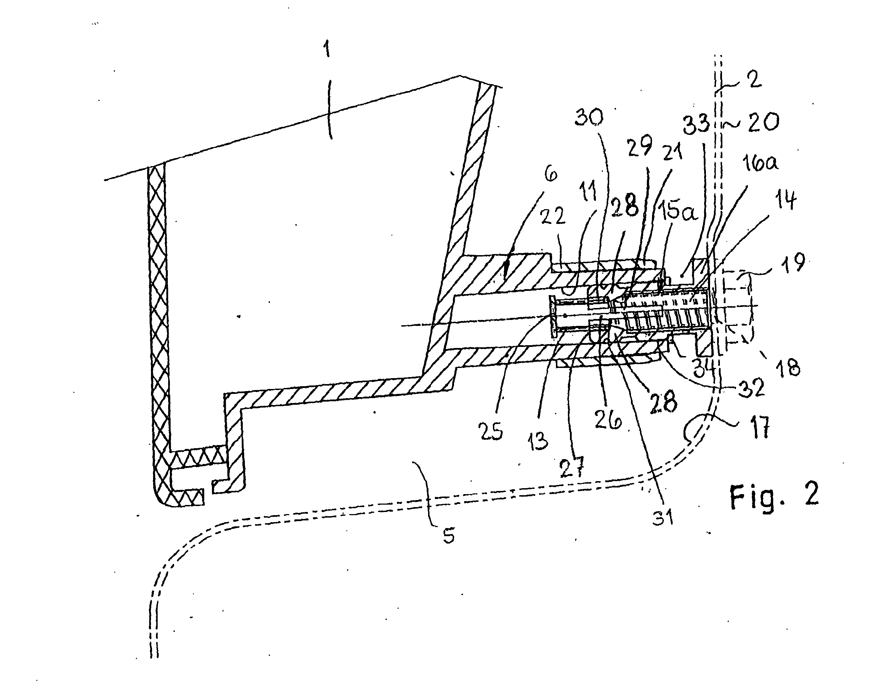

Bei der Ausführungsform gemäß Fig. 2 stützt sich die Druckfeder 13 an einem Quersteg 25 ab, der im Ansatz 6 vorgesehen ist und sich diametral erstreckt.

Die Gewindehülse 15a liegt unmittelbar an der Innenwand 11 des Ansatzes 6 an. Innerhalb des Ansatzes 6 hat die Gewindehülse 15a größere Wandstärke als im Bereich außerhalb des Ansatzes 6. Wie bei der vorigen Ausführungsform kann die Gewindehülse 15a axial in bezug auf den Ansatz 6 bei der Montage der Heckleuchte 1 verschoben werden. Wird die Schraube 14 durch die Öffnung 18 in der Karosserie 2 in die Gewindehülse 15a geschraubt, wird diese elastisch aufgeweitet und damit die Heckleuchte 1 in ihrer richtigen Einbaulage gehalten. Die Gewindehülse 15a ist gegen Drehen im Ansatz 6 gesichert, so daß sie bei der Montage der Heckleuchte 1 zuverlässig axial verschoben werden kann. Da die Gewindehülse 15a relativ zum Ansatz 6 verschoben werden kann, ist der lagegenaue Einbau der Heckleuchte 1 zuverlässig und einfach möglich. Mit einer Lehre wird die Heckleuchte 1 zunächst in ihre genaue Einbaulage im Einbauraum 5 gebracht, bis der Bund 16a der Gewindehülse 15a an der Außenwand 17 der Karosserie anliegt.

Die Gewindehülse 15a ist an ihrem vom Bund 16a abgewandten Ende geschlitzt ausgebildet. Sie weist wenigstens zwei diametral einander gegenüberliegende, axial verlaufende Längsschlitze 26 auf, die sich vom freien Ende 27 der Gewindehülse 15a aus erstrecken. Im Ausführungsbeispiel reichen die Längsschlitze 26 etwa über die halbe Länge der Gewindehülse 15a. Zwischen den Längsschlitzen 26 werden somit federnde Abschnitte 28 gebildet, die beim Einschrauben der Schraube 14 radial nach außen fest gegen die Innenwand 11 des Ansatzes 6 gedrückt werden. Um einen hohen Anpreßdruck zu erreichen, sind die Abschnitte 28 innenseitig mit einem in Richtung auf das freie Ende 27 sich verjüngenden konischen Innenwandabschnitt 29 versehen, auf den die Schraube 14 beim Einschrauben trifft. Über diesen Konusabschnitt 29 werden die Abschnitte 28 der Gewindehülse 15a radial nach außen gedrückt. Der konische Innenwandabschnitt 29 ist in einer solchen axialen Lage vorgesehen, daß die Schraube 14 mit ihrem Schaft auf jeden Fall auf diesen Konusabschnitt 29 gelangt und dadurch die federnden Abschnitte 28 der Gewindehülse 15a radial nach außen drückt.

In die Stirnseite 27 der Gewindehülse 15a mündet zentrisch eine zylindrische Vertiefung 30, in welche die Druckfeder 13 ragt, die am radialen Boden 31 der Vertiefung 30 abgestützt ist. Der konische Abschnitt 29 mündet zentrisch in den Boden 31 der Vertiefung 30.

Zur Axialsicherung der Gewindehülse 15a im Ansatz 6 ist in der äußeren Mantelfläche 32 der Gewindehülse 15a eine Ringnut 33 vorgesehen, die an einem axialen Ende durch den Bund 16a begrenzt ist. In die Ringnut 33 greift ein Federkäfig 34 ein. Die Ringnut 33 ist axial so lang, daß die Gewindehülse 15a auch bei größten Einbautoleranzen in der beschriebenen Weise durch die Feder 13 fest gegen die Innenseite 17 der Karosserie 2 gedrückt wird. Der den Ansatz 6 umgebende Ring 22 verhindert wie bei der vorigen Ausführungsform ein unzulässiges Aufweiten des Endabschnittes 21 des Abschnittes 6 durch die Abschnitte 28 der Gewindehülse 15a.

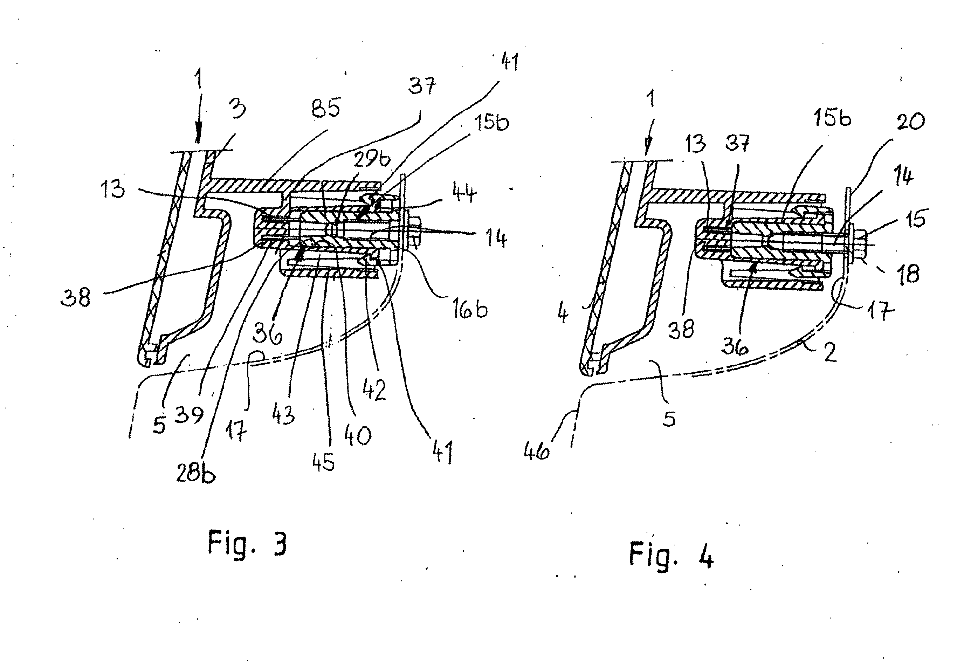

Bei der nicht erfindungsgemäßen Ausführungsform nach den Fig. 3 und 4 ist das Gehäuse 3 der Heckleuchte 1 mit einer quer abstehenden Rippe 35 versehen, die vorzugsweise einstückig mit dem Gehäuse 3 ausgebildet ist. An der Rippe 35 ist eine Aufnahme 36 vorgesehen, vorzugsweise einstückig mit ihr ausgebildet. Die Aufnahme 36 ist beispielsweise zylindrisch ausgebildet und hat einen Boden 37, der teilweise radial über die Aufnahme 36 ragt. Mit diesem überstehenden Bodenteil ist die Aufnahme 36 mit der Rippe 35 verbunden, vorzugsweise einstückig mit ihr ausgebildet. Der Boden 37 ist zentrisch mit einer Verdickung 38 versehen, die in Richtung auf die Heckleuchte 1 vorsteht und innenseitig eine Ringnut 39 aufweist, in die das eine Ende der Druckfeder 13 ragt.

In die Aufnahme 36 ist die Gewindehülse 15b eingesetzt, die an der Innenwand 40 der Aufnahme 36 anliegt. An ihrem über die Aufnahme 36 ragenden Ende ist die Gewindehülse 15b mit dem Bund 16b versehen, der am Umfang mit wenigstens zwei diametral einander gegenüberliegenden, axial sich erstreckenden Sicherungselementen 41 versehen ist, die am freien Ende jeweils mit einer radial nach innen vorstehenden Nase 42 versehen sind. Die Sicherungselemente 41 ragen mit den Nasen 42 in axial verlaufende Vertiefungen 43, die in der Außenseite der Aufnahme 36 vorgesehen sind. Die Breite der Vertiefungen 43 entspricht der Breite der Nasen 42, so daß die Gewindehülse 15b nicht um ihre Achse gedreht, sondern lediglich axial gegenüber der Aufnahme 36 verschoben werden kann. Die Vertiefungen 43 sind an ihrem von der Heckleuchte 1 abgewandten Ende durch eine Radialschulter 44 begrenzt, die auch als Anschlag für die Sicherungselemente 41 dient. Dadurch ist gewährleistet, daß die Gewindehülse 15b nicht unbeabsichtigt aus der Aufnahme 36 gezogen werden kann.

Im Bereich neben der Rippe 35 ist die Aufnahme 36 von einer Außenwand 45 mit radialem Abstand umgeben, die vorteilhaft einstückig mit dem Boden 37 der Aufnahme 36 ausgebildet ist.

Die Gewindehülse 15b ist entsprechend der vorhergehenden Ausführungsform mit Abstand vom freien Ende mit dem konischen Innenwandabschnitt 29b versehen, an dem das freie Ende der Schraube 14 in der Ausgangslage (Fig. 4) anliegt.

Bevor die Heckleuchte 1 an der Karosserie 2 des Fahrzeuges befestigt wird, ist die Gewindehülse 15b so weit in die Aufnahme 36 geschoben (Fig. 4), daß sie am Boden 37 der Aufnahme 36 anliegt. Die Heckleuchte 1 wird mit einer Lehre in ihre genaue Einbaulage im Einbauraum 5 positioniert. In dieser Einbaulage hat die Gewindehülse 15b Abstand von der Innenseite 17 der Karosserie 2. Durch die Öffnung 18 der Karosserie 2 wird die Schraube 14 in die Gewindehülse 15b geschraubt, bis der Schraubenkopf 15 an der Außenseite 20 der Karosserie 2 anliegt. Die genaue Einbaulage der Heckleuchte 1 ist beispielsweise dadurch bestimmt, daß die Lichtscheibe 4 mit ihrer Außenseite bündig zu den an den Einbauraum 5 anschließenden Außenseiten 46 der Karosserie 2 liegt.

Durch Drehen der Schraube 14 wird die Gewindehülse 15b aus der Aufnahme 36 so weit herausgezogen, bis sie mit ihrem Bund 16b an der Innenseite 17 des Einbauraumes 5 der Karosserie 2 anliegt (Fig. 3). Durch die mit ihren Nasen 42 in die Vertiefungen 43 eingreifenden Sicherungselemente 41 ist sichergestellt, daß die Gewindehülse 15b nicht gegenüber der Aufnahme 36 drehen kann. Dadurch wird die Gewindehülse 15b zuverlässig aus der Aufnahme 36 gezogen und gegen die Außenseite 17 der Karosserie 2 gedrückt.

Über den konischen Innenwandabschnitt 29b werden die wiederum durch Längsschlitze getrennten Abschnitte 28b radial nach außen gegen die Innenwand 40 der Aufnahme 36 gedrückt, so daß die Heckleuchte 1 zuverlässig in der Einbaulage gehalten wird. Die Druckfeder 13 liegt in montierter Lage der Heckleuchte 1 unter Vorspannung an der Gewindehülse 15b an.

Die Sicherungselemente 41 sind so ausgebildet und/oder vorgesehen, daß die Gewindehülse 15b auch bei größeren Karosserietoleranzen zuverlässig mit ihrem Bund 16b an die Außenseite 17 der Karosserie 2 angepreßt wird.

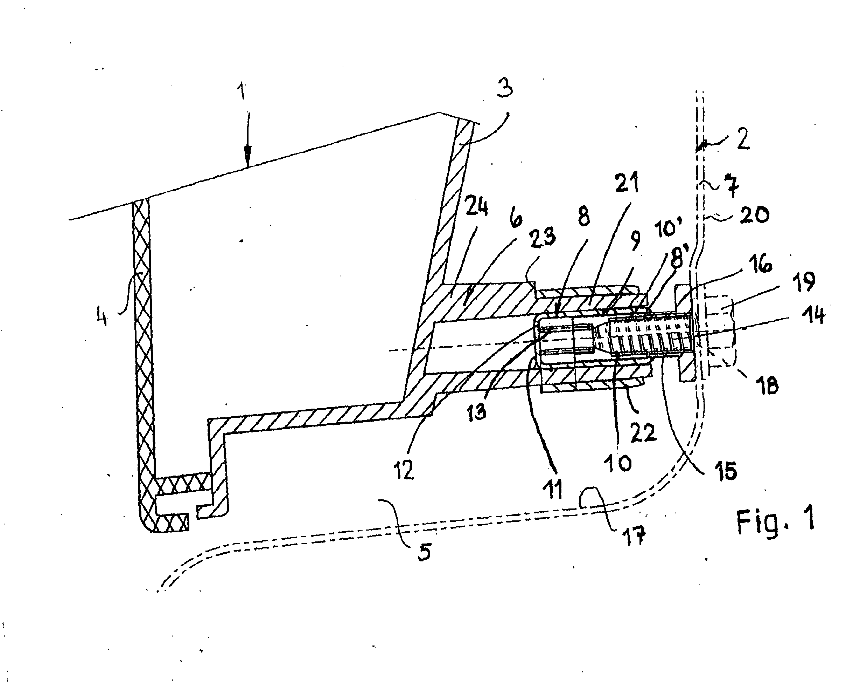

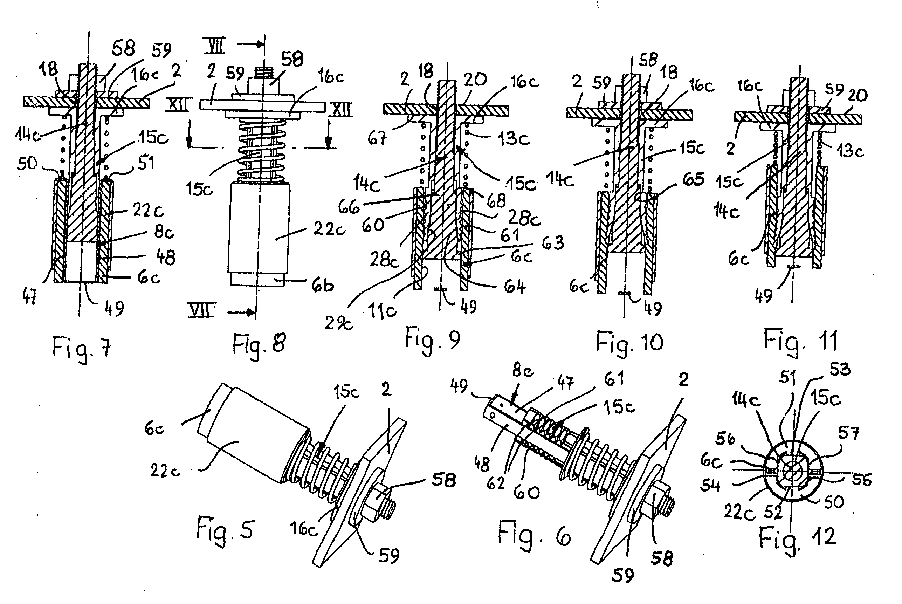

Die Fig. 5 bis 12 zeigen eine weitere Ausführungsform einer Befestigungseinrichtung. Die Heckleuchte ist in den Fig. 5 bis 12 nicht dargestellt. Der Ansatz 6c ist jedoch entsprechend der Ausführungsform nach den Fig. 1 und 2 am Gehäuse 3 der Heckleuchte 1 (Fig. 1 und 2) vorgesehen, vorzugsweise einstückig mit ihm ausgebildet. Der zylindrische Ansatz 6c hat vorteilhaft kreisförmigen Querschnitt und weist über seine Länge konstante Wanddicke auf. Auf dem Ansatz 6c sitzt die Hülse 22c, die ein radiales Aufweiten des Ansatzes 6c bei der Montage verhindert.

In den Ansatz 6c ist ein im wesentlichen U-förmiger Halter 8c eingesetzt, der entsprechend der Ausführungsform nach den Fig. 1 und 2 als U-förmige Halteklammer ausgebildet ist. Der Halter 8c hat die beiden parallel zueinander liegenden Schenkel 47, 48, die durch einen rechtwinklig zu ihnen verlaufenden ebenen Steg 49 ineinander übergehen. Die freien Enden 50, 51 der Schenkel 47, 48 sind entgegengesetzt zueinander rechtwinklig abgebogen und liegen auf der Stirnseite des Ansatzes 6c auf. Vorteilhaft übergreifen die freien Enden 50, 51 auch die Hülse 22c geringfügig.

Zwischen die Schenkel 47, 48 des Halters 8c ragt die Gewindehülse 15c, die entsprechend den vorherigen Ausführungsformen als Spreizhülse ausgebildet ist. Sie hat den radial nach außen gerichteten Bund 16c, mit dem sie in der Einbaulage an der Karosserie 2 anliegt. Die Gewindehülse 15c hat, wie sich aus Fig. 12 ergibt, viereckigen Umriß und ist verdrehgesichert im Ansatz 6c aufgenommen. Die freien Enden 50, 51 der Schenkel 47, 48 des Halters 8c sind halbringförmig ausgebildet (Fig. 12) und haben eine solche Form, daß sie die Drehsicherung der Gewindehülse 15c übernehmen. Etwa in halber Länge sind die beiden Enden 50, 51 jeweils mit einem rechteckigen Vorsprung 52, 53 versehen. Die beiden Vorsprünge 52, 53 liegen diametral einander gegenüber, sind radial nach innen gerichtet und liegen mit ihren ebenen Stirnseiten an der ebenen Seitenwand der Gewindehülse 15c an. Außerdem sind die beiden Enden 50, 51 mit ebenen Seitenwänden 54, 55; 56, 57 versehen, an denen die Gewindehülse 15c mit ihren anderen Seitenwänden flächig anliegt. Auf diese Weise liegen die Enden 50, 51 an allen vier Seiten der Gewindehülse 15c an.

In ihrem außerhalb des Ansatzes 6c liegenden Bereich ist die Gewindehülse 15c mit der Gewindebohrung zur Aufnahme der Schraube 14c versehen. Sie ragt durch die Öffnung 18 im Karosserieblech 2 nach innen und trägt eine Mutter 58, die unter Zwischenlage einer Unterlegscheibe 59 an der Innenseite 20 des Karosseriebleches 2 anliegt.

In ihrem innerhalb der Aufnahme 6c liegenden Bereich ist die Gewindehülse 15c geschlitzt ausgebildet. Sie hat entsprechend den vorhergehenden Ausführungsformen wenigstens die beiden axial verlaufenden Längsschlitze. Dadurch werden die Abschnitte 28c gebildet (Fig. 9), die an ihrer an der Innenwand 11c des Ansatzes 6c anliegenden Außenseite mit einer Profilierung 60, 61 versehen sind. Sie erstrecken sich über den geschlitzten Bereich der Gewindehülse 15c und sind beispielhaft so ausgebildet, daß sie in Umfangsrichtung der Gewindehülse 15c sich erstreckende, verhältnismäßig scharfe Kanten 62 aufweisen, die über die axiale Länge des geschlitzten Bereiches der Gewindehülse 15c mit Abstand voneinander vorhanden sind. Durch eine solche Ausbildung ist eine zuverlässige reibschlüssige Verbindung zwischen der Gewindehülse 15c und dem Ansatz 6c gewährleistet.

Die Schraube 14c ragt durch die Gewindehülse 15c in den Ansatz 6c und ist an dessen Innenwand 11c mit einem endseitigen, radial nach außen gerichteten Flansch 63 (Fig. 9) radial geführt. Die Schraube 14c weist einen in Richtung auf den Flansch 63 konisch sich erweiternden Wandabschnitt 64 auf, der bei der Montage mit dem entsprechend konisch ausgebildeten Innenwandabschnitt 29c zusammenwirkt. Die Schraube 14c ist lediglich in dem vom Flansch 63 abgewandten Endbereich mit Gewinde versehen.

Im Bereich zwischen dem Bund 16c der Gewindehülse 15c und dem Ansatz 6c befindet sich die Druckfeder 13c, die sich mit ihren Enden am Bund 16c und an der Stirnseite des Ansatzes 6c abstützt.

Die Gewindebohrung der Gewindehülse 15c geht mit geringem Abstand vom geschlitzten Bereich innenseitig in einen erweiterten Bohrungsabschnitt 65 (Fig. 10) über. Er ist mit axialem Abstand von dieser Übergangsstelle mit dem konischen Wandabschnitt 29c versehen. Auch die Schraube 14c ist in diesem Bereich mit einem verbreiterten Abschnitt 66 versehen, der den konischen Wandabschnitt 64 aufweist.

Bei der Montage der (nicht dargestellten) Heckleuchte sind in den Ansatz 6c der Heckleuchte der Halter 8c, die Gewindehülse 15c und die Schraube 14c bereits eingesetzt (Fig. 9). Die Schraube 14c ragt durch die Öffnung 18 des Karosseriebleches 2 nach innen. Wie anhand der vorigen Ausführungsbeispiele beschrieben worden ist, wird die Heckleuchte mit einer Lehre in die genaue Einbaulage gebracht. Je nach Einbautoleranzen ist hierbei der Abstand des Ansatzes 6c von der Außenseite des Karosseriebleches 2 unterschiedlich. Fig. 10 zeigt die Verhältnisse, wenn sehr große Einbautoleranzen bestehen. In diesem Falle hat der Ansatz 6c den größten Abstand vom Karosserieblech 2. In dieser Lage ist die Gewindehülse 15c so in bezug auf den Ansatz 6c der Heckleuchte angeordnet, daß der beschriebene Übergang der Gewindehülse 15c in den im Außendurchmesser verbreiterten geschlitzten Abschnitt in Höhe der dem Karosserieblech 2 zugewandten Stirnseite des Ansatzes 6c liegt.

Fig. 11 zeigt die Verhältnisse, wenn die Einbautoleranzen sehr gering sind. In diesem Falle hat der Ansatz 6c der Heckleuchte einen wesentlich kleineren Abstand vom Karosserieblech 2 als bei der Stellung gemäß Fig. 10. Dementsprechend ist auch die Druckfeder 13c stärker zusammengedrückt als bei der Stellung gemäß Fig. 10. Da sich die Gewindehülse 15c mit ihrem Bund 16c in beiden Stellungen gemäß den Fig. 10 und 11 an der Außenseite des Karosseriebleches 2 anlegt, befindet sich der längsgeschlitzte Bereich der Gewindehülse 15c tiefer im Ansatz 6c als bei der Stellung nach Fig. 10.

In beiden Fällen gemäß den Fig. 10 und 11 wird, sobald die Heckleuchte ihre genaue Einbaulage einnimmt, auf das durch die Öffnung 18 des Karosseriebleches 2 ragende Ende der Gewindehülse 15c die Unterlegscheibe 59 gesteckt und anschließend die Mutter 58 geschraubt. Da sie über die Unterlegscheibe 59 an der Innenseite 20 des Karosseriebleches 2 anliegt, wird die Schraube 14c axial in bezug auf die Gewindehülse 15c verschoben. Über die aneinander liegenden konischen Wandabschnitte 29c, 64 wird die Gewindehülse 15c, wie anhand der vorigen Ausführungsbeispiele erläutert, elastisch aufgefedert und gegen die Innenwand 11c des Ansatzes 6c gepreßt. Der Anpreßdruck ist so hoch, daß die Heckleuchte in der Einbaulage zuverlässig gehalten wird.

Der Bund 16c der Gewindehülse 15c liegt vorteilhaft unter Zwischenlage einer Dichtscheibe 67 (Fig. 9) am Karosserieblech 2 an. Am Übergang vom schmalen Abschnitt zum erweiterten Abschnitt der Schraube 14c befindet sich ein Dichtring 68, vorzugsweise ein ORing (Fig. 9). Die Dichtscheibe 67 und der Dichtring 68 dichten einwandfrei den Naßbereich gegenüber dem Trockenbereich ab.

Bei den beschriebenen Ausführungsformen wird die Heckleuchte 1 über die Schraube 14, 14c nicht unmittelbar an der Karosserie 2 befestigt, sondern über den Reibschluß zwischen der Gewindehülse 15, 15a, 15b, 15c und dem Ansatz 6, 6c bzw. der Aufnahme 36. Die Heckleuchte 1 kann im Bedarfsfall einfach demontiert werden. Die Schraube 14 bzw. die Mutter 58 werden lediglich in umgekehrter Richtung gedreht, wodurch die Gewindehülse in die Aufnahme bzw. in den Ansatz geschraubt wird. Aufgrund der relativen Verschiebbarkeit zwischen der Gewindehülse und der Heckleuchte 1 können auf einfache Weise größere Karosserietoleranzen bei der Montage der Heckleuchte 1 berücksichtigt und ausgeglichen werden. Die Heckleuchte 1 läßt sich dadurch problemlos in der gewünschten genauen Einbaulage montieren.

## Patentansprüche

1. Einrichtung mit einer Heckleuchte (1) eines Fahrzeuges, vorzugsweise eines Kraftfahrzeuges, und einer Befestigungseinrichtung, mit wenigstens einem Befestigungselement (14, 14c), vorzugsweise einer Schraube, die mit einem einem Gehäuse (3) der Heckleuchte (1) zugeordneten Gegenelement (15, 15c) zusammenwirkt, das relativ zum Gehäuse (3) der Heckleuchte (1) verstellbar ist, in einer Aufnahme (6, 6c) des Gehäuses (3) untergebracht ist und mit dem Befestigungselement (14, 14c) gegen eine Wand (2) eines Einbauraumes (5) der Heckleuchte (1) und gegen die Wand der Aufnahme (6, 6c) verspannbar ist,
**dadurch gekennzeichnet, dass** in der Aufnahme (6, 6c) ein hülsenförmiger oder u-förmiger Halter (8, 8c) untergebracht ist, der durch eine Feder (13, 13c) belastet ist und in den das Gegenelement (15, 15c) ragt.

2. Einrichtung mit einer Heckleuchte (1) eines Fahrzeuges, vorzugsweise eines Kraftfahrzeuges, und einer Befestigungseinrichtung, mit wenigstens einem Befestigungselement (14), vorzugsweise einer Schraube, die mit einem einem Gehäuse (3) der Heckleuchte (1) zugeordneten Gegenelement (15a) zusammenwirkt, das relativ zum Gehäuse (3) der Heckleuchte (1) verstellbar ist, in einer Aufnahme (6) des Gehäuses (3) untergebracht ist und mit dem Befestigungselement (14) gegen eine Wand (2) eines Einbauraumes (5) der Heckleuchte (1) und gegen die Wand der Aufnahme (6) verspannbar ist,
**dadurch gekennzeichnet, dass** in der Aufnahme (6) wenigstens eine Druckfeder (13) untergebracht ist, die sich mit einem Ende an einem Quersteg (25) abstützt, der in der Aufnahme (6) vorgesehen ist und sich diametral erstreckt, und dass die Druckfeder (13) mit ihrem anderen Ende das Gegenelement (15a) in Richtung auf die Wand (2) des Einbauraumes (5) belastet.

3. Einrichtung nach Anspruch 1 oder 2,
**dadurch gekennzeichnet, dass** die Aufnahme (6, 6c, 36) einstückig mit dem Gehäuse (3) ausgebildet ist.

4. Einrichtung nach einem der Ansprüche 1 bis 3,
**dadurch gekennzeichnet, dass** das Gegenelement (15, 15a bis 15c) eine Gewindehülse ist.

5. Einrichtung nach Anspruch 1,
**dadurch gekennzeichnet, daß** das Befestigungselement (14, 14c) durch die Druckfeder (13, 13c) belastet ist.

6. Einrichtung, nach einem der Ansprüche 1 bis 5,
**dadurch gekennzeichnet, daß** das Gehäuse (3) der Heckleuchte (1) durch Reibschluß in seiner Einbaulage gehalten ist.

7. Einrichtung nach Anspruch 6,
**dadurch gekennzeichnet, daß** das Gegenelement (15, 15a, 15b, 15c) durch das Befestigungselement (14, 14c) zur Erzielung des Reibschlusses elastisch aufweitbar ist.

8. Einrichtung nach Anspruch 7 oder 8,
**dadurch gekennzeichnet, daß** das Gegenelement (15, 15a, 15b, 15c) durch Schlitze (10', 26) voneinander getrennte, elastisch verformbare Abschnitte (8', 28, 28b) aufweist, die durch das Befestigungselement (14, 14c) elastisch verformbar sind.

9. Einrichtung nach einem der Ansprüche 1 bis 8,
**dadurch gekennzeichnet, daß** das Gegenelement (15, 15a, 15b, 15c) an einem Ende mit einem Bund (16, 16a, 16b, 16c) versehen ist.

10. Einrichtung nach Anspruch 9,
**dadurch gekennzeichnet, daß** die Druckfeder (13c) am Bund (16c) des Gegenelementes (15c) angreift und sich gehäuseseitig abstützt.

11. Einrichtung nach einem der Ansprüche 1 bis 10,
**dadurch gekennzeichnet, daß** die Aufnahme (6, 6c) von wenigstens einem Ring (22, 22c) umgeben ist.

12. Einrichtung nach einem der Ansprüche 1 bis 11,
**dadurch gekennzeichnet, daß** das Gegenelement (15a, 15b) durch wenigstens einen Anschlag (34, 44) an der Aufnahme (6, 36) in seinem Verschiebeweg begrenzt ist.

13. Einrichtung nach einem der Ansprüche 2 bis 12,
**dadurch gekennzeichnet, daß** die Aufnahme (6, 36) wenigstens einen in Verschieberichtung des Gegenelementes (15a, 15b) sich erstreckenden Freiraum (33, 43) aufweist.

14. Einrichtung nach Anspruch 13,
**dadurch gekennzeichnet, daß** das Gegenelement (15b) mit wenigstens einem vorteilhaft hakenförmig ausgebildeten und mit einer Nase (42) in den Freiraum (43) eingreifenden Sicherungselement (41) in den Freiraum (43) eingreift.

15. Einrichtung nach Anspruch 14,
**dadurch gekennzeichnet, daß** der Freiraum (43) und die Nase (42) gleich breit sind.

16. Einrichtung nach einem der Ansprüche 1 bis 15,
**dadurch gekennzeichnet, daß** das Befestigungselement (14c) mit einer Mutter (58) verschiebbar ist, die sich kraftfahrzeugseitig abstützt.

17. Einrichtung nach einem der Ansprüche 1 bis 16,
**dadurch gekennzeichnet, daß** das Befestigungselement (14, 14c) relativ zum Gegenelement (15, 15a, 15b, 15c) axial bewegbar ist.

18. Einrichtung nach einem der Ansprüche 1 bis 17,
**dadurch gekennzeichnet, daß** das Befestigungselement (14, 14c) und das Gegenelement (15, 15a, 15b, 15c) miteinander zusammenwirkende Aufweitabschnitte (29, 29b, 29c; 64) zum elastischen Aufweiten des Gegenelementes (15, 15a, 15b, 15c) aufweisen.

## Claims

1. Device with a rear light (1) for a vehicle, preferably a motor vehicle, and a fastening device with at least one fastening element (14, 14c) preferably a screw, acting in cooperation with a counter-element (15, 15c), allocated to an encasement (3) of the rear light (1), adjustable relatively to the encasement (3) of the rear light (1), installed within a retainer (6, 6c) of the housing (3) and can be braced with the fastening element (14, 14c) against a wall (2) of an installation space (5) of the rear light (1) and against the wall of the retainer (6, 6c),
**characterized in that** a shell-shaped or U-shaped holder (8, 8c) is accommodated within the retainer (6, 6c), loaded by a spring (13, 13c) and into which the counter-element (15, 15c) is projecting.

2. Device with a rear light (1) of a vehicle, preferably a motor vehicle, and a fastening device with at least one fastening element (14), preferably a screw, acting in cooperation with a counter-element (15, 15c), allocated to an encasement (3) of the rear light (1), adjustable relatively to the encasement (3) of the rear light (1), installed within a retainer (6) of the encasement (3) and can be braced with the fastening element (14) against a wall (2) of an installation space (5) of the rear light (1) and against the wall of the retainer (6),
**characterized in that** within the retainer (6) is accommodated by at least a compression spring (13), supporting itself with one end at a crossbar (25), provided within the retainer (6) and that the compression spring (13) strains with its other end the counter-element (15a) in the direction towards the wall (2) of the installation space (5).

3. Device according to claim 1 or 2,
**characterized in that** the retainer (6, 6c, 36) is configured in one piece with the housing (3).

4. Device according to claim 1 to 3,
**characterized in that** the counter-element (15, 15a, 15b) is a tapped bush.

5. Device according to claim 1,
**characterized in that** the fastening element (14, 14c) is loaded by the compression spring (13, 13c).

6. Device according to one of the claims 1 to 5,
**characterized in that** the encasement (3) of the rear light (1) is held in its installation position by frictional engagement.

7. Device according to claim 6,
**characterized in that** the counter-element (15, 15a, 15b, 15c) is elastically expandable by the fastening element (14, 14c) for the attainment of the frictional engagement.

8. Device according to claim 7 or 8,
**characterized in that** the counter-element (15, 15a, 15b, 15c) comprises elastically deformable sectors (8, 28, 28b), divided from one another by slots (10, 26) and elastically deformable by the fastening element (14, 14c).

9. Device according to one of the claims 1 to 8,
**characterized in that** the counter-element (15, 15a, 15b, 15c) is provided at one end with a collar (16, 16a, 16b, 16c).

10. Device according to claim 9,
**characterized in that** the compression spring (13c) engages at the collar (16c) of the counter-element (15c) and supports itself on the side of the encasement.

11. Device according to one of the claims 1 to 10,
**characterized in that** the retainer (6, 6c) is surrounded by at least one ring (22, 22c).

12. Device according to one of the claims 1 to 11,
**characterized in that** the counter-element (15a, 15b) is limited by at least one stop (34, 44) at the retainer (6, 36) in its displacement course.

13. Device according to one of the claims 2 to 12,
**characterized in that** the retainer (6, 36) comprises at least one clearance zone (33, 43), extending in the direction of displacement of the counter-element (15a, 15b).

14. Device according to claim 13,
**characterized in that** the counter-element (15b) fits into the clearance space (43) with at least one safety member (41), advantageously hook-shaped and engaging with a nose (42) into the clearance space (43).

15. Device according to claim 14,
**characterized in that** the clearance space (43) and the nose (42) are equally broad.

16. Device according to one of the claims 1 to 15,
**characterized in that** the fastening element (14c) is displacable with a nut (58), supporting itself on the motorvehicle-side.

17. Device according to one of the claims 1 to 16,
**characterized in that** the fastening element (14, 14c) is axially movable relatively to the counter-element (15, 15a, 15b, 15c).

18. Device according to one of the claims 1 to 17,
**characterized in that** the fastening element (14, 14c) and the counter-element (15, 15a, 15b, 15c) comprise expanding sectors (29, 29b, 29c, 64), acting with one another in combination for the elastic expansion of the counter-element (15, 15a, 15b, 15c).

## Revendications

1. Système englobant un feu arrière (1) d'un véhicule, de préférence d'un véhicule automobile, et un dispositif de fixation comprenant au moins un élément de fixation (14, 14c), de préférence une vis, interagissant avec un élément conjugué (15, 15c) qui est associé à un boitier (3) du feu arrière (1), est réglable par rapport au boitier (3) du feu arrière (1), est logé dans un logement de réception (6, 6c) du boitier (3), et peut être serré avec l'élément de fixation (14, 14c) contre une paroi (2) d'un espace d'implantation (5) du feu arrière (1) et contre la paroi du logement de réception (6, 6c),
**caractérisé en ce que** dans le logement de réception (6, 6c) est logé un support (8, 8c) en forme de douille ou en forme de U, qui est chargé ou sollicité par un ressort (13, 13c) et dans lequel s'engage l'élément conjugué (15, 15c).

2. Système englobant un feu arrière (1) d'un véhicule, de préférence d'un véhicule automobile, et un dispositif de fixation comprenant au moins un élément de fixation (14), de préférence une vis, interagissant avec un élément conjugué (15a) qui est associé à un boitier (3) du feu arrière (1), est réglable par rapport au boitier (3) du feu arrière (1), est logé dans un logement de réception (6) du boitier (3), et peut être serré avec l'élément de fixation (14) contre une paroi (2) d'un espace d'implantation (5) du feu arrière (1) et contre la paroi du logement de réception (6),
**caractérisé en ce que** dans le logement de réception (6) est logé au moins un ressort de compression (13) qui s'appuie avec une extrémité sur une nervure transversale (25) prévue dans le logement de réception (6) et s'étendant diamétralement, et **en ce que** le ressort de compression (13) charge ou sollicite, avec son autre extrémité, l'élément conjugué (15a) en direction de la paroi (2) de l'espace d'implantation (5).

3. Système selon la revendication 1 ou 2,
**caractérisé en ce que** le logement de réception (6, 6c, 36) est réalisé d'un seul tenant avec le boitier (3).

4. Système selon l'une des revendications 1 à 3,
**caractérisé en ce que** l'élément conjugué (15, 15a à 15c) est une douille filetée.

5. Système selon la revendication 1,
**caractérisé en ce que** l'élément de fixation (14, 14c) est chargé ou sollicité par le ressort de compression (13, 13c).

6. Système selon l'une des revendications 1 à 5,
**caractérisé en ce que** le boitier (3) du feu arrière (1) est maintenu par une liaison par adhérence dans sa position implantée.

7. Système selon la revendication 6,
**caractérisé en ce que** l'élément conjugué (15, 15a, 15b, 15c) peut subir une expansion élastique par l'élément de fixation (14, 14c) en vue d'obtenir la liaison par adhérence.

8. Système selon la revendication 6 ou 7,
**caractérisé en ce que** l'élément conjugué (15, 15a, 15b, 15c) présente des secteurs (8', 28, 28b) déformables de manière élastique, séparés les uns des autres par des fentes (10', 26), et pouvant être déformés de manière élastique par l'élément de fixation (14, 14c).

9. Système selon l'une des revendications 1 à 8,
**caractérisé en ce que** l'élément conjugué (15, 15a, 15b, 15c) est pourvu à une extrémité, d'une collerette (16, 16a, 16b, 16c).

10. Système selon la revendication 9,
**caractérisé en ce que** le ressort de compression (13c) agit sur la collerette (16c) de l'élément conjugué (15c) et prend appui sur le boitier.

11. Système selon l'une des revendications 1 à 10,
**caractérisé en ce que** le logement de réception (6, 6c) est entouré par au moins un anneau (22, 22c).

12. Système selon l'une des revendications 1 à 11,
**caractérisé en ce que** l'élément conjugué (15a, 15b) est limité dans son déplacement de coulissement par au moins une butée (34, 44) sur le logement de réception (6, 36).

13. Système selon l'une des revendications 2 à 12,
**caractérisé en ce que** le logement de réception (6, 36) présente au moins un espace libre de dégagement (33, 43) s'étendant dans la direction de coulissement de l'élément conjugué (15a, 15b).

14. Système selon la revendication 13,
**caractérisé en ce que** l'élément conjugué (15b) s'engage avec au moins un élément de sécurité (41) avantageusement en forme de crochet et pénétrant avec un mentonnet (42) dans l'espace libre de dégagement (43), dans l'espace libre de dégagement (43).

15. Système selon la revendication 14,
**caractérisé en ce que** l'espace libre de dégagement (43) et le mentonnet (42) sont de même largeur.

16. Système selon l'une des revendications 1 à 15,
**caractérisé en ce que** l'élément de fixation (14c) peut être déplacé en coulissement à l'aide d'un écrou (58) qui s'appuie du côté véhicule automobile.

17. Système selon l'une des revendications 1 à 16,
**caractérisé en ce que** l'élément de fixation (14, 14c) est axialement mobile par rapport à l'élément conjugué (15, 15a, 15b, 15c).

18. Système selon l'une des revendications 1 à 17,
**caractérisé en ce que** l'élément de fixation (14, 14c) et l'élément conjugué (15, 15a, 15b, 15c) présentent des secteurs d'expansion (29, 29b, 29c ; 64) interagissant mutuellement pour l'expansion élastique de l'élément conjugué (15, 15a, 15b, 15c).
